# EUROPÄISCHE PATENTSCHRIFT

(11) **EP 1 410 058 B1**
(45) Veröffentlichungstag und Bekanntmachung des Hinweises auf die Patenterteilung: **16.09.2009**
(21) Anmeldenummer: 02708239.5
(22) Anmeldetag: 12.02.2002
(51) Int. Cl.: G01S 15/89, G01N 29/04, G01N 29/38, G01N 29/40, G01N 29/48, B23K 11/25

(54) **VORRICHTUNG ZUR SIGNALAUSWERTUNG BEI DER ULTRASCHALLANALYSE VON SCHWEISSVERBINDUNGEN**
DEVICE FOR EVALUATING SIGNALS
DISPOSITIF D'EVALUATION DE SIGNAL

(30) Priorität: 02.03.2001 DE 10110045
(43) Veröffentlichungstag der Anmeldung: 21.04.2004
(73) Patentinhaber: ROBERT BOSCH GMBH, 70442 Stuttgart (DE)
(72) Erfinder: ARNDT, Volker, 64711 Erbach (DE)
(74) Vertreter: Leischner, Stefan
(86) Internationale Anmeldenummer: PCT/DE2002/000509
(87) Internationale Veröffentlichungsnummer: WO 2002/071091

(56) Entgegenhaltungen:
- DE-A- 4 031 895
- DE-A- 4 325 878
- US-A- 3 958 451
- US-A- 4 137 776
- US-A- 4 213 183
- US-A- 4 480 475
- US-A- 5 439 157
- US-A- 5 641 906
- PATENT ABSTRACTS OF JAPAN vol. 010, no. 030 (P-426), 5. Februar 1986 (1986-02-05) & JP 60 181651 A (NIPPON KOKAN KK), 17. September 1985 (1985-09-17)

## Beschreibung

### Stand der Technik

Aus der DE-A 43 25 878 ist ein Verfahren zur Bewertung von Widerstandsschweißverbindungen bekannt. Um Schweißungen noch während des Schweißvorgangs zu bewerten, wird die Ultraschalldurchlässigkeit der Schweißverbindung bei der Beaufschlagung mit Scherwellen bestimmt. Hierzu wird während jeder Stromhalbwelle des Schweißstromes aus dem Ausgangssignal des Ultraschallempfängers innerhalb eines Zeitfensters, das gegenüber dem konstanten Ultraschall-Sendesignal um eine definierte Verzögerungszeit verzögert ist, die mittlere Ultraschallenergie ermittelt. Diese wird als Maß für die Güte der Schweißverbindung herangezogen. Wie jedoch das Zeitfenster gewählt und um welche Zeitspanne es gegenüber dem Ultraschall-Sendesignal verzögert werden soll, wird offengelassen.

Aus der DE 40 31 895 A1 ist eine Vorrichtung und ein Verfahren zur Datenerfassung und -verarbeitung bekannt. Dabei werden von einem Material reflektierte Signale erfasst, um Defekte in dem Material zu analysieren. Eine Schaltung dient zum Unterteilen der Signale in eine Mehrzahl separater, unabhängiger Abschnitte für die selektive Auswertung von Wellenformanteilen.Aus der US 5,641,906 ist eine Vorrichtung und ein Verfahren zur automatisierten, nicht zerstörenden Inspektion von integrierten Schaltungen bekannt. Dabei werden akustisch reflektierte Bilder von ausgewählten Ebenen innerhalb einer integrierten Schaltungsanordnung erzeugt, um Defekte innerhalb der Anordnungen zu erkennen.

Aus der US 4,480,475 ist ein Verfahren zur Echtzeit-Untersuchung von Schweißungen bekannt. Dabei wird ein Ultraschallsignal durch die Schweißverbindung gesendet, um Schweißfehler zu erkennen. Wird ein Fehler erkannt, wird der Schweißprozess angehalten.Die US 4,213,183 beschreibt eine Vorrichtung zur nicht-zerstörenden Untersuchung der Eignenschaften von Materialfehlern. In der JP 60181651 A wird eine automatische Kalibrierung einer Ultraschall-Pehleruntersuchungs-Vorrichtung beschrieben, wobei Beobachtungsfenster mit vorgegebenen Weiten eingesetzt werden.

Die US 3,958,451 beschreibt eine Ultraschall - Untersuchungs - Vorrichtung. Dabei ist ein Signalprozessor vorgesehen, der unwesentliche Teile eines empfangenen Signale eliminiert. Die US 4,137,776 offenbart Schaltungen, die eine Folge gleichartiger Pulse erzeugen. Diese Pulse werden entsprechend eines zurückgegebenen und empfangenen Echos gemittelt und abgespeichert. Die US 5,439,175 beschreibt eine Vorrichtung zur automatisierten Untersuchung von Schweißungen mit Hilfe von Ultraschall - Wellen. Dabei werden die Schweißungen nach dem Beendigen des jeweiligen Schweißvorgangs untersucht.

Es ist Aufgabe der vorliegenden Erfindung, eine Vorrichtung anzugeben, die eine automatische Anpassung des Messfensters an unterschiedliche Messsituationen ermöglicht. Diese Aufgabe wird mit den Merkmalen des unabhängigen Anspruchs gelöst.

### Vorteile der Erfindung

Die erfindungsgemäße Vorrichtung zur Signalauswertung weist eine Messwertauswertung auf, die im Normalbetrieb zumindest ein von einem Ultraschallsignal abgeleitetes, innerhalb eines Messfensters liegendes Messsignal weiterverarbeitet. Erfindungsgemäß sind Mittel zum Festlegen des Messfensters vorgesehen, die das Messfenster in Abhängigkeit von einem in einem Kalibrierbetrieb empfangenen Messsignal festlegen. Durch die unmittelbare Berücksichtigung des Messsignals bei der Wahl des Messfensters lassen sich automatisch unterschiedliche Situationen hinsichtlich der Umgebungsbedingungen berücksichtigen. Außerdem muss das Messfenster nicht jedesmal neu von Hand justiert werden. Die Einstellung des Messfensters erfolgt automatisch vor dem Beginn des jeweiligen Prozess, der durch die Messwerterfassung gesteuert wird. Damit können auch weniger qualifizierte Mitarbeiter mit den entsprechenden Mess- und Regeleinrichtungen arbeiten. Außerdem kann die Vorrichtung dazu genutzt werden, frühzeitig mögliche Fehlerquellen anzuzeigen. Insbesondere bei der Verwendung für eine Widerstandsschweißanlage lassen sich frühzeitig Aussagen über einen möglichen Elektrodenverschleiß treffen. Auch kann eine Zangenüberprüfung in der Produktionspause erfolgen.

In einer zweckmäßigen Weiterbildung ist eine Laufzeiterfassung vorgesehen, die das Messfenster in Abhängigkeit von der Laufzeit des Messsignals festlegt. Durch die Berücksichtigung der Laufzeit in Bezug auf ein das Messsignal bewirkende Sendesignal kann das Messfenster auf den jeweiligen Prozess abgestimmt werden, da der Prozess unter Umständen die Laufzeit beeinflusst. Dadurch erhöht sich die Genauigkeit des Auswerteverfahrens.

Eine zweckmäßige Weiterbildung sieht eine Nulldurchgangsermittlung des Messsignals vor, anhand dessen die Periodendauer des Messsignals bestimmt wird, die ebenfalls zur Festlegung des Messfensters herangezogen werden kann. Das Messfenster beginnt und endet vorzugsweise bei einem Nulldurchgang. Außerdem lassen sich auch Aussagen darüber treffen, ob die so bestimmbaren Frequenzen des Sendesignals und des Messsignals näherungsweise übereinstimmen. Das Messfenster wird so festgelegt, dass solche Messwerte berücksichtigt werden, deren Frequenz bzw. Periodendauer näherungsweise mit der des Sendesignals übereinstimmt. Dadurch werden nur aussagekräftige Messwerte ausgewertet.

In einer zweckmäßigen Weiterbildung ist eine Extremwertermittlung des Messsignals vorgesehen, deren Ausgangssignal zur Festlegung des Messfensters herangezogen wird. Das Messfenster kann nun so gewählt werden, dass die Extremwerte (Maximum, Minimum) der Messwerte innerhalb des Messfensters liegen und zur Weiterverarbeitung herangezogen werden.

In einer vorteilhaften Ausgestaltung handelt es sich bei dem Messwert um ein Ultraschallsignal, das zur Bewertung der Güte und/oder Regelung einer Schweißverbindung, insbesondere einer Widerstandsschweißverbindung, ausgewertet wird.

Weitere zweckmäßige Weiterbildungen ergeben sich aus weiteren abhängigen Ansprüchen und aus der Beschreibung.

### Zeichnung

Ein Ausführungsbeispiel der Erfindung ist in der Zeichnung dargestellt und wird im Folgenden näher beschrieben. Es zeigen die Figuren 1 und 2 ein Blockschaltbild der erfindungsgemäßen Vorrichtung, die Figuren 3a, 3b, 4a bis 4c charakteristische zeitabhängige Signalverläufe sowie die Figur 5 ein Flussdiagramm zum Betrieb der Vorrichtung.

Eine erste Schweißelektrode 11 wird mit einem Strom I beaufschlagt. An der ersten Schweißelektrode 11 ist ein Ultraschallsender 14 angeordnet. An der Außenwand einer zweiten Schweißelektrode 12 ist ein Ultraschallempfänger 16 angebracht. Zwischen den beiden Elektroden 11 und 12 befinden sich ein erstes Blech 21 und ein zweites Blech 22, die durch einen Schweißpunkt 18 verbunden werden. Der Ultraschallsender 14 wird mit einem Sendesignal US beaufschlagt, das eine Senderansteuerung 24 in Abhängigkeit von einem Triggersignal Trig einer Schweißsteuerung 28 bereitstellt. Das Sendesignal US wird über die erste Elektrode 11, das erste und zweite Blech 21, 22, den Schweißpunkt 18 und über die zweite Elektrode 12 zu dem Ultraschallempfänger 16 geführt. Der Ultraschallempfänger 16 gibt ein Messsignal UE an eine Signalerfassung 26 ab. Die Signalerfassung 26 leitet das erfasste Messsignal an eine Signalverarbeitung 30 weiter.

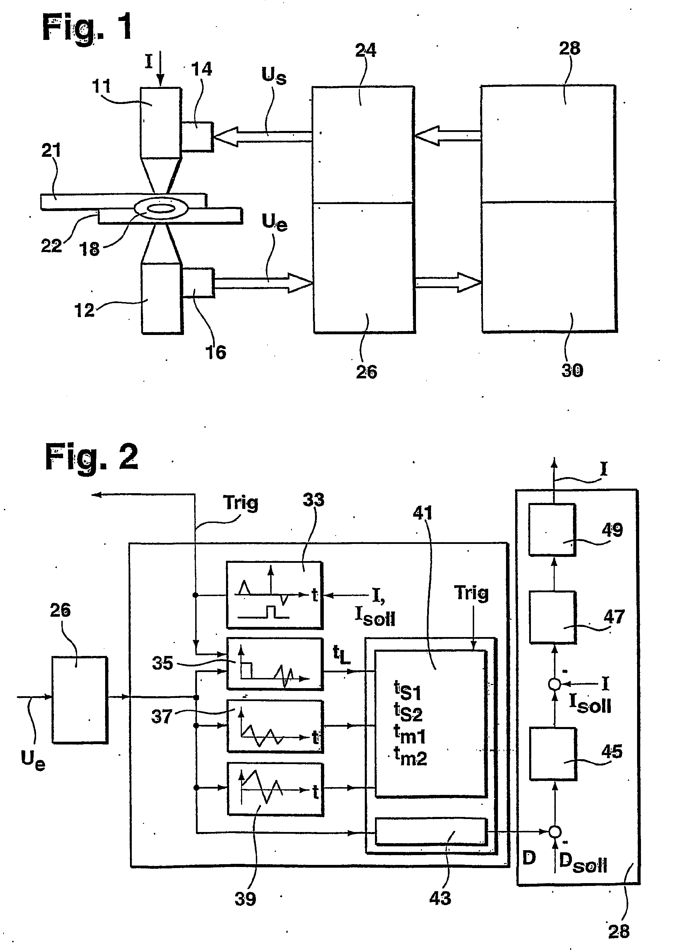

In der Figur 2 ist der Aufbau der Schweißsteuerung 28 und der Signalverarbeitung 30 näher ausgeführt. Das von der Signalerfassung 26 erfasste Messsignal UE gelangt an die folgenden vier Funktionseinheiten. Eine Laufzeitermittlung 35 ermittelt in Abhängigkeit von dem Triggersignal Trig und dem Messsignal KE die Laufzeit TL für eine Messfensterermittlung 41. Außerdem ist eine Nulldurchgangsermittlung 37 vorgesehen sowie eine Extremwertermittlung 39, die jeweils ihre Ausgangssignale an die Messfensterermittlung 41 abgeben. Diese legt das Messfenster bzw. dessen Parameter TS1, TS2, TM1, TM2 fest. In Abhängigkeit von dem Messfenster wertet eine Messwertauswertung 43 das Ausgangssignal der Signalerfassung 26 aus und ermittelt daraus den Istwert der Durchlässigkeit D. Die Durchlässigkeit D ist eine Eingangsgröße für die Schweißsteuerung 28. An einem ersten Summationspunkt wird die Differenz zwischen der ermittelten Durchlässigkeit D und der Solldurchlässigkeit D-Soll gebildet, die einem Ultraschallregler 45 zugeführt wird. Der Ultraschallregler 45 ermittelt daraus einen Stromsollwert 1-Soll. An einem zweiten Summationspunkt wird die Differenz gebildet aus dem Stromsollwert 1-Soll und dem Stromistwert I. Die Differenz erhält ein Stromregler 47 als Eingangsgröße und erzeugt damit ein Ansteuersignal für ein Stellglied 49. Das Stellglied 49 bewirkt den gewünschten Stromfluss I durch die Elektroden 11, 12 zur Erzeugung eines die Bleche 21, 22 verbindenden Schweißpunkts 18. In der Signalverarbeitung 30 ist außerdem ein Triggergenerator 33 vorgesehen, der den Stromverlauf I auswertet zur Erzeugung eines Triggersignals Trig. Der Triggergenerator 33 könnte auch in der Schweißsteuerung 28 integriert sein.

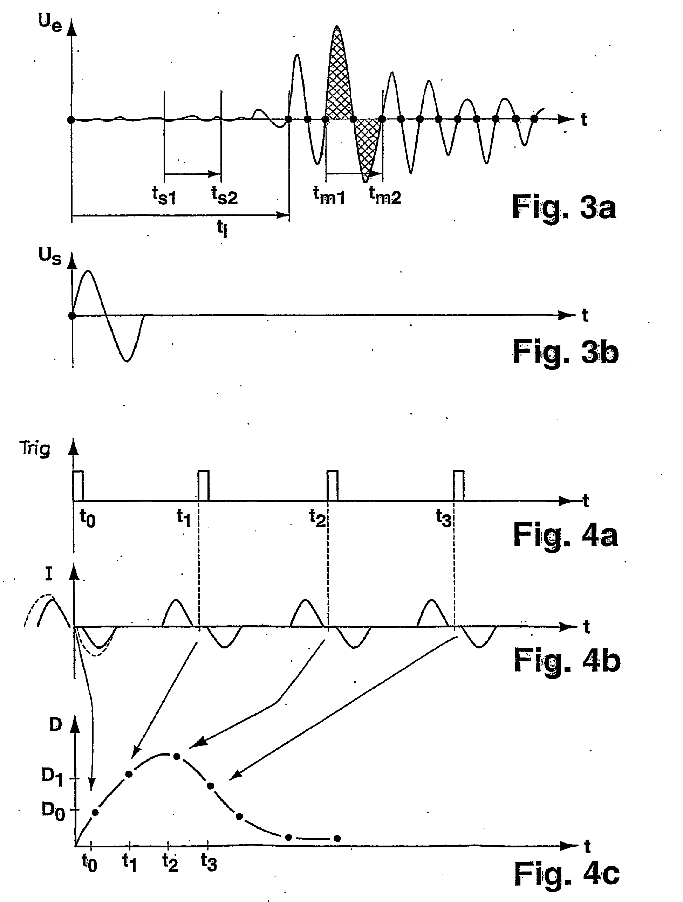

Die Figur 3a zeigt den zeitlichen Verlauf des Messsignals UE. Zum Zeitpunkt t = 0 gibt der Ultraschallsender 14 ein Sendersignal US ab, das eine Sinusschwingung beinhaltet (Figur 3b). Nach der Laufzeit TL erfasst der Ultraschallempfänger 16 das Messsignal UE, dessen Amplitude der Sinusschwingung zuerst zu, dann jedoch wieder betragsmäßig abnimmt und ausschwingt. Innerhalb der Laufzeit TL wird das Störfenster plaziert, das durch die Parameter TS1 und TS2 festgelegt wird. Ebenso verhält es sich mit dem Messfenster mit den Parametern TM1 und TM2.

Im Normalbetrieb wird die Widerstandsschweißanlage mit einem lückenden, Sinushalbwellen aufweisenden Strom I beaufschlagt(Figur 4b). Die Stromstärke I lässt sich, wie gestrichelt angedeutet, durch Veränderung der Stellgröße beein-flussen. Abhängig von dem Stromverlauf I gemäß Figur 4b ergibt sich der Verlauf des Triggersignals Trig. Das Triggersignal Trig ist hierbei so gewählt, dass gerade dann eine Messung durch Aussenden des Sendesignals US gestartet wird, wenn kein Strom I fließt. In Figur 4c ist die Durchlässigkeit D in-Abhängigkeit von der Zeit dargestellt. Für eine gute Schweißung weist die Durchlässigkeitskurve den skizzierten Verlauf auf. Nur solche Messwerte tragen zur Bestimmung der Durchlässigkeit bei, die innerhalb des Messfensters TM1, TM2 liegen. Eine Aussendung des Sendesignal US wird durch das Triggersignal Trig aktiviert.

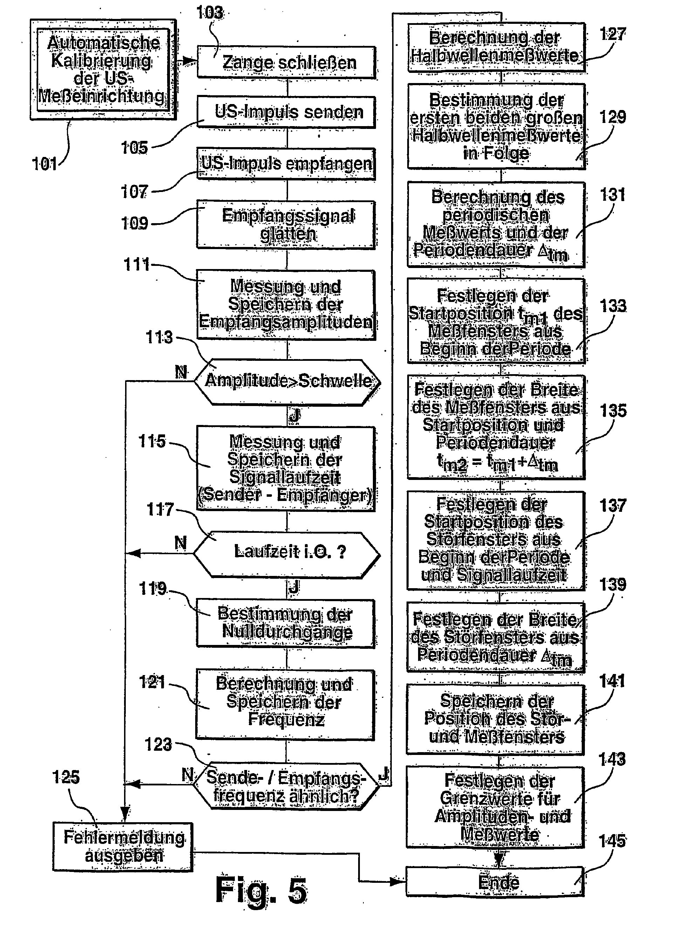

Anhand des Flussdiagramms gemäß Figur 5 wird die Festlegung eines Mess- bzw. Störfensters TM1, TM2, TS1, TS2 beschrieben. Durch den Start des Schweißvorgangs wird die automatische Kalibrierung der Ultraschallmesseinrichtung aktiviert, Schritt 101. Daraufhin schließt die Schweißsteuerung die aus den beiden Elektkroden 11, 12 gebildete Schweißzange, Schritt 103. Anschließend veranlasst die Senderansteuerung 24 den Ultraschallsender 14 zur Abgabe eines Sendersignals US, das den in Figur 3b gezeigten Verlauf aufweist, Schritt 105. Der Ultraschallsender 14 sendet vorzugsweise Scherwellen aus, die sich in der Wandung der Elektroden 11, 12 ausbreiten und die der Ultraschallempfänger 16 empfängt und in Form des Messsignals UE an die Signalerfassung 26 weiterleitet, Schritt 107. Die Signalerfassung 26 glättet das Messsignal UE durch entsprechende Filter, Schritt 109. Der zeitliche Verlauf der Amplitude des Messsignals UE wird gemessen und eingespeichert, so dass der in Figur 3a dargestellte Signalverlauf des Messsignals UE den Einrichtungen 35, 37, 39, 43 zur Verfügung steht, Schritt 111. In Abfrage 113 wird überprüft, ob die Amplitude des Messsignals UE eine Schwelle innerhalb einer vorgebbaren Zeitspanne betragsmäßig überschreitet, Abfrage 113. Sollte dies nicht der Fall sein, lässt dies auf einen Fehlerfall schließen, da kein Messsignal UE bei dem Ultraschallempfänger 16 ankam. Es wird eine ensprechende Fehlermeldung ausgegeben, Schritt 125.

Andernfalls wird die Laufzeit TL zwischen dem Sendesignal US und dem Messsignal UE ermittelt durch die Laufzeitermittlung 35, Schritt 115. Der Triggerzeitpunkt Trig und damit der Start des Sendersignals US ist bekannt. Mit dem Triggersignal Trig wird ein der Zeiterfassung dienender Zähler gestartet, der erst dann wieder gestoppt wird, wenn die Amplitude des Messsignals UE einen bestimmten Schwellenwert betragsmäßig überschreitet. Dieser Schwellenwert ist so gewählt, dass Störsignale nicht erfasst werden. In Figur 3a ist die so ermittelte Laufzeit TL gezeigt. Sind beispielsweise Ultraschallsender 14 und Ultraschallempfänger 16, 110 mm voneinander entfernt, liegt die (theoretische) Laufzeit TL in der Größenordnung von 50 µs. In Abhängigkeit von dieser rechnerisch ermittelten Größe kann ein Grenzwert festgelegt werden, mit dem die in Schritt 115 ermittelte Laufzeit TL verglichen wird, Schritt 117. Innerhalb des Grenzwerts sollte das Messsignal UE eingehen bzw. den vorgebbaren Amplitudenschwellenwert überschreiten, ansonsten liegt ein Fehler vor, Schritt 125.

Anschließend bestimmt die Nulldurchgangsermittlung 37 die nulldurchgänge der Amplitude des Messsignals UE, Schritt 119. Damit sind die Zeitpunkte bekannt, bei denen die Amplitude des Messsignals UE den Wert Null annimmt. Anhand der Zeitpunkte der Nulldurchgänge können die zugehörigen Periodendauern und Frequenzen ermittelt und gespeichert werden, Schritt 121. Hierzu bilden bei einem sinusförmigen Messsignal UE die drei ersten Messwerte die erste Periodendauer, dessen Kehrwert der Frequenz des Messsignals UE entspricht. Die zweite Periodendauer ergibt sich aus dem dritten bis fünften Nulldurchgang mit zugehöriger Frequenz. Auf dieses Art und Weise lassen sich den jeweiligen positiven und negativen Halbwellen Frequenzen zuordnen. Auch die Frequenz des Sendesignals US ist bekannt. Die in Schritt 121 ermittelten Frequenzen werden mit der Sendefrequenz des Sendesignals US verglichen, Abfrage 123. Weichen Sendefrequenz und Messsignalfrequenz nur geringfügig voneinander ab, wurde ein aussagekräftiges Messsignal UE gewonnen. Andernfalls wird eine Fehlermeldung in Schritt 125 ausgegeben.

In Schritt 127 werden daraufhin aus dem in Schritt 115 ermittelten zeitlichen Amplitudenverlauf des Messsignals UE sogenannte Halbwellenmesswerte errechnet. Als Halbwellenmesswert wird der Effektivwert, das arithmetische Mittel oder ein sonstiges Maß für den Energieinhalt einer Halbwelle des Messsignals UE bestimmt. Damit steht für jede Halbwelle (positiv oder negativ) des Messsignals UE der entsprechende Halbwellenmesswert zur Verfügung.

Im darauffolgenden Schritt 129 werden die beiden ersten größten Halbwellenmesswerte in Folge durch die Extremwertermittlung 39 ermittelt, indem beispielsweise der Effektivwert des Messsignals UE eine vorgebbare Schwelle überschreitet. Bei dem Signalverlauf gemäß Figur 3a sind dies die beiden jeweils eine schraffierte Fläche einschließenden Halbwellen. Die von der jeweiligen Halbwelle eingeschlossene Fläche ist ein Maß für den entsprechenden Halbwellenmesswert bzw. Effektivwert. Anschließend wird ein periodischer Messwert aus der Summe der ermittelten beiden ersten größten Halbwellenmesswerte bestimmt mit der zugehörigen periodendauer. Die Periodendauer lässt sich anhand der in Schritt 119 bestimmten Nulldurchgänge ermitteln. Diese Periodendauer legt die Breite des Messfensters fest, Schritt 131. Der Startpunkt TM1 des Messfensters TM1 wird nun so gewählt, dass die beiden ersten (betragsmäßig) größten Halbwellenmesswerte in Folge innerhalb dieses Messfensters TM1, TM2 liegen. Bei dem vorliegenden Signalverlauf gemäß Figur 3a wird der Start des Messfensters TM1 auf den dritten Nulldurchgang gelegt. Das Ende des Messfensters TM2 ergibt sich aus der Summe des Startzeitpunkts TM1 des Messfensters und der im Schritt 131 ermittelten Periodendauer, Schritt 135.

Auch die Breite des Störfensters TS1, TS2 stimmt mit der Breite des Messfensters TM1, TM2 überein. Der Startpunkt des Störfensters wird dabei so gewählt, dass das Störfenster TS1, TS2 innerhalb der Laufzeit TL des Messsignals UE liegt, um eine Überlappung von Störfenster TS1, TS2 und Messfenster TM1, TM2 zu verhindern. Vorzugsweise liegt das Ende TS2 des Störfensters zeitlich vor dem ersten Nulldurchgang. Die Positionen des Mess- und Störfensters TM1, TM2, TS1, TS2 werden gespeichert, Schritt 141. Außerdem werden die Grenzwerte beispielsweise zur Überwachung des Messignals UE festgelegt, Schritt 143. Anhand des Maximalswerts des in dem Messfenster liegenden Messsignals UE kann ein erster Grenzwert für die Überwachung des im Störfenster auftretenden Messignals UE herangezogen werden, beispielsweise liegt der erste Grenzwert bei 20% des Extremwerts. Überschreitet das Messsignal UE im Störfenster den Grenzwert, ist dies ein Indiz für einen Fehler. Damit ist der Programmablauf zur automatischen Messfensterfestlegung beendet, Schritt 145.

Die Einstellungen des Störfensters TS1, TS2 und des Messfensters TM1, TM2 werden für den nachfolgenden Schweißvorgang beibehalten. Im laufenden Betrieb wird immer in der unbestromten Phase (I = 0) der Ultraschallsender 14 mit Auftreten des Triggersignals Trig aktiviert. Anschließend werden die innerhalb des Messfensters TM1, TM2 liegenden Messwerte ausgewertet zur Bestimmung der Durchlässigkeit D der Schweißverbindung. Hierzu wird der Energieinhalt beispielsweise über den Effektivwert der beiden Halbwellen ermittelt, wie in Verbindung mit Schritt 131 bereits ausgeführt wurde. Zum ersten Triggerzeitpunkt T0 ergibt sich eine erste Durchlässigkeit D0, bei dem zweiten Triggerzeitpunkt T1 eine zweite Durchlässigkeit D1 und sofort. Durch die gezielte Wahl des Messfensters TM1, TM2 und der Auswertung des nur innerhalb dieses Messfensters TM1, TM2 liegenden zeitlichen Verlaufs des Messsignals UE ist sichergestellt, dass lediglich die geeigneten Messsignale UE für die Bestimmung der Durchlässigkeitskurve D herangezogen werden.

In der Schweißsteuerung 28 wird die so ermittelte Durchlässigkeitskurve D gemäß Figur 4c mit einer für eine gute Schweißung repräsentativen Solldurchlässigkeitskurve D-soll verglichen und die Schweißung über den Strom I im laufenden Betrieb ständig korrigiert. Dies wird mit der in Figur 2 gezeigten Regelung erreicht. Der Strom I wird damit so angepasst, dass die Solldurchlässigkeitskurve D-soll sicher erreicht wird.

## Patentansprüche

1. Vorrichtung zur Signalauswertung eines Ultraschallsignals, mit einer Messwertauswertung (43), die im Normalbetrieb einer Widerstandsschweißanlage zumindest ein von einem Ultraschallsignal abgeleitetes, innerhalb eines Messfensters (TM1, TM2) liegendes Messsignal (UE) zur Bewertung einer Schweißverbindung (18) auswertet, wobei Mittel (35, 37, 39, 41) zum Festlegen des Messfensters (TM1. TM2) in einem vor dem Normalbetrieb der Widerstandsschweißanfage auszuführenden Kalibrierbetrieb einer Ultraschallmesseinrichtung vorgesehen sind, wobei die Mittel (35, 37, 39, 41) zum Festlegen des Messfensters (TM1, TM2) das Messfenster (TM1, TM2) in Abhängigkeit von einem in dem Kalibrierbetrieb auftretenden Messsignal (UE) festlegen **dadurch gekennzeichnet, dass**
die Mittel (35, 37, 39, 41) zum Festlegen des Messfensters (TM1, TM2) ausgebildet sind, um eine Überprüfung durchzuführen, ob die Amplitude des Messsignals (UE) eine Schwelle innerhalb einer vorgebbaren Zeitspanne betragsmäßig überschreitet, wobei
die Mittel (35, 37, 39, 41) zum Festlegen des Messfensters (TM1, TM2) eine Laufzeitermittlung (37) umfassen, die ausgebildet ist, um die Zeitspanne zwischen einem Start eines Sendesignals (US) und einem Zeitpunkt eines ersten betragsmäßigen Überschreitens des Messsignals (UE) über einen vorbestimmten Schwellenwert als Laufzeit (TL) zu ermitteln und die ermittelte Laufzeit (TL) mit einem festgelegten Grenzwert zu vergleichen, wobei
die Mittel (35, 37, 39, 41) zum Festlegen des Messfensters (TM1, TM2) ferner eine Nulldurchgangsermittlung (37) umfassen, die ausgebildet ist, um Zeitpunkte zu bestimmen, bei denen die Amplitude des Messsignals (UE) den Wert Null annimmt, wobei die Nulldurchgangsermittlung (37) ausgebildet ist, um anhand der Zeitpunkte der Nulldurchgänge die zugehörigen Perlodendauern und Frequenzen zu ermitteln, wobei die Nulldurchgangsermittlung (37) ferner ausgebildet ist, um die ermittelten Frequenzen mit einer Sendefrequenz eines Sendesignals (US) zu vergleichen, und wobei
die Mittel (35, 37, 39, 41) zum Festlegen des Messfensters (TM1, TM2) ausgebildet sind, um aus einem zeitlichen Amplitudenverlauf des Messsignals (UE) Halbwellenmesswerte zu errechnen, die ein Maß für den Energieinhalt einer Halbwelle des Messsignals (US), insbesondere einen Effektivwert oder ein arithmetisches Mittel, repräsentieren, wobei die Mittel (35, 37, 39, 41) zum Festlegen des Messfensters (TM1, TM2) ausgebildet sind, um die beiden größten Halbwellenmesswerte in Folge zu bestimmen und wobei die Mittel (35, 37, 39, 41) zum Festlegen des Messfensters (TM1, TM2) ferner ausgebildet sind, um aus den beiden größten Halbwellenmesswerten in Folge eine zugehörige Periodendauer (Δₜₘ) zu bestimmen, die eine zeitliche Breite des Messfensters (TM1, TM2) festlegt, und wobei die Mittel (35, 37, 39, 41) zum Festlegen des Messfensters (TM1, TM2) ferner ausgebildet sind, um einen Startpunkt (TM1) des Messfensters auf denjenigen Nulldurchgang der Amplitude des Messsignals (UE) zu legen, dass die beiden größten Halbwellenmesswerte in Folge innerhalb des Messfensters (TM1, TM2) liegen.

2. Vorrichtung gemäß Anspruch 1, **dadurch gekennzeichnet, dass** die Mittel (35, 37, 39, 41) zum Festlegen des Messfensters (TM1, TM2) ausgebildet sind, um ein Störfenster (TS1, TS2) zu bestimmen, das die Breite des Messfensters (TM1, TM2) aufweist und das innerhalb der Laufzeit (TL) liegt, wobei die Mittel (35 37, 39, 41) zum Festlegen des Messfensters (TM1, TM2) ausgebildet sind, um einen Grenzwert für die Überwachung des im Störfenster (TS1, TS2) auftretenden Messsignals (UE) festzulegen, wobei dieser Grenzwert anhand des Maximalswerts des in dem Messfenster liegenden Messsignals (UE) festgelegt wird, wobei die Mittel (35, 37, 39, 41) zum Festlegen des Messfensters (TM1, TM2) ausgebildet sind, um einen Fehler zu erkennen, wenn das Messsignal (UE) im Störfenster (TS1, TS2) den Grenzwert überschreitet

3. Vorrichtung nach einem der vorhergehenden Ansprüche, **dadurch gekennzeichnet, dass** ein Triggergenerator (33) vorgesehen ist, der die Aussendung eines Sendesignals (US) veranlasst, das das Messsignal (UE) bewirkt.

4. Vorrichtung nach einem der vorhergehenden Ansprüche, **dadurch gekennzeichnet, dass** es sich bei dem Ultraschallsignal um Transversalwellen handelt.

5. Vorrichtung nach einem der vorhergehenden Ansprüche, **dadurch gekennzeichnet, dass** das Ausgangssignal der Messwertauswertung (43) einer Steuerung (28) zugeführt ist zur Erzeugung einer charakteristischen Größe (I) für den Schweißprozess.

6. Vorrichtung nach Anspruch 3, **dadurch gekennzeichnet, dass** der Triggergenerator (33) die Aussendung des Sendesignals (US) in Abhängigkeit von der charakteristischen Größe (I) veranlasst.

## Claims

1. Apparatus for evaluating an ultrasonic signal, having a measured value evaluation unit (43) which, during normal operation of a resistance welding installation, evaluates at least one measurement signal (UE) which is derived from an ultrasonic signal and is inside a measurement window (TM1, TM2) in order to assess a welded joint (18), provision being made of means (35, 37, 39, 41) for determining the measurement window (TM1, TM2) in a calibration mode of an ultrasonic measuring device, which calibration mode is to be carried out before normal operation of the resistance welding installation, the means (35, 37, 39, 41) for determining the measurement window (TM1, TM2) determining the measurement window (TM1, TM2) on the basis of a measurement signal (UE) which occurs in the calibration mode,
**characterized in that**
the means (35, 37, 39, 41), for determining the measurement window (TM1, TM2) are designed to carry out a check in order to determine whether the magnitude of the amplitude of the measurement signal (UE) exceeds a threshold inside a predefinable period of time,
the means (35, 37, 39, 41) for determining the measurement window (TM1, TM2) comprising a delay determination unit (37) which is designed to determine, as the delay (TL), the period of time between the start of a transmission signal (US) and a time at which the magnitude of the measurement signal (UE) first exceeds a predetermined threshold value and to compare the determined delay (TL) with a determined limit value,
the means (35, 37, 39, 41) for determining the measurement window (TM1, TM2) also comprising a zero crossing determination unit (37) which is designed to determine times at which the amplitude of the measurement signal (UE) assumes the value zero, the zero crossing determination unit (37) being designed to use the times of the zero crossings to determine the associated period durations and frequencies, the zero crossing determination unit (37) also being designed to compare the determined frequencies with a transmission frequency of a transmission signal (US), and
the means (35, 37, 39, 41) for determining the measurement window (TM1, TM2) being designed to use a temporal amplitude profile of the measurement signal (UE) to calculate half-cycle measured values which represent a measure of the energy content of a half-cycle of the measurement signal (UE), in particular an r.m.s. value or an arithmetic mean, the means (35, 37, 39, 41) for determining the measurement window (TM1, TM2) being designed to determine the two largest half-cycle measured values in succession, and the means (35, 37, 39, 41) for determining the measurement window (TM1, TM2) also being designed to use the two largest half-cycle measured values in succession to determine an associated period duration (Δₜₘ) which determines a duration of the measurement window (TM1, TM2), and the means (35, 37, 39, 41) for determining the measurement window (TM1, TM2) also being designed to place a starting point (TM1) of the measurement window at that zero crossing of the amplitude of the measurement signal (UE) at which the two largest half-cycle measured values in succession are inside the measurement window (TM1, TM2).

2. Apparatus according to Claim 1, **characterized in that** the means (35, 37, 39, 41) for determining the measurement window (TM1, TM2) are designed to determine a disturbance window (TS1, TS2) which has the width of the measurement window (TM1, TM2) and is inside the delay (TL), the means (35, 37, 39, 41) for determining the measurement window (TM1, TM2) being designed to determine a limit value for monitoring the measurement signal (UE) which occurs in the disturbance window (TS1, TS2), this limit value being determined using the maximum value of the measurement signal (UE) in the measurement window, the means (35, 37, 39, 41) for determining the measurement window (TM1, TM2) being designed to detect an error if the measurement signal (UE) in the disturbance window (TS1, TS2) exceeds the limit value.

3. Apparatus according to one of the preceding claims, **characterized in that** provision is made of a trigger generator (33) which causes the emission of a transmission signal (US) which gives rise to the measurement signal (UE).

4. Apparatus according to one of the preceding claims, **characterized in that** the ultrasonic signal is transverse waves.

5. Apparatus according to one of the preceding claims, **characterized in that** the output signal from the measured value evaluation unit (43) is supplied to a controller (28) in order to generate a characteristic variable (I) for the welding process.

6. Apparatus according to Claim 3, **characterized in that** the trigger generator (33) causes the transmission signal (US) to be emitted on the basis of the characteristic variable (I).

## Revendications

1. Dispositif pour l'exploitation d'un signal à ultrasons comportant un moyen d'exploitation d'une valeur de mesure (43) qui, en mode de fonctionnement normal, et dans une installation de soudage par résistance, exploite un signal de mesure (UE) déduit d'un signal d'ultrasons et se situant dans une fenêtre de mesure (TM1, TM2) pour évaluer une soudure (18),
des moyens (35, 37, 39, 41) étant prévus pour définir la fenêtre de mesure (TM1, TM2) pendant un mode de calibrage d'une station de mesure par ultrasons appliqué avant le fonctionnement normal de l'installation de soudage par résistance,
les moyens (35, 37, 39, 41) définissant la fenêtre de mesure (TM1, TM2) en fonction d'un signal de mesure (UE) obtenu dans le mode de calibrage,
**caractérisé en ce que**
les moyens (35, 37, 39, 41) définissant la fenêtre de mesure (TM 1, TM2) sont réalisés pour contrôler si l'amplitude du signal de mesure (UE) dépasse l'amplitude d'un seuil à l'intérieur d'une période prédéfinie, et les moyens (35, 37, 39, 41) définissant la fenêtre de mesure (TM 1, TM2) comportent un moyen de détermination du temps de fonctionnement (37) pour déterminer la période entre le début d'un signal d'émission (US) et l'instant d'un premier dépassement d'amplitude du signal de mesure (UE) passant au dessus d'une valeur de seuil prédéfinie comme temps de fonctionnement (TL) et pour comparer le temps de fonctionnement (TL) obtenu à une valeur limite fixée,
les moyens (35, 37, 39, 41) définissant la fenêtre de mesure (TM1, TM2) comprennent en outre un moyen pour déterminer un passage par zéro (37) pour déterminer les instants auxquels l'amplitude du signal de mesure (UE) prend la valeur nulle, le moyen de détermination du passage par zéro (37) étant conçu pour qu'à l'aide des instants des passages par zéro, il détermine les durées de périodes et les fréquences correspondantes, le moyen de détermination du passage par zéro (37) étant en outre réalisé pour comparer les fréquences obtenues à une fréquence d'émission dans le signal d'émission (US), et
les moyens (35, 37, 39, 41) définissant la fenêtre de mesure (TM 1, TM2) étant réalisés pour qu'à partir d'une évolution d'amplitude en fonction du temps du signal de mesure (UE), ils calculent des valeurs de mesure de demie-onde représentant une mesure du contenu d'énergie d'une demie-onde du signal de mesure (US), notamment d'une valeur efficace ou d'une moyenne arithmétique, les moyens (35, 37, 39, 41) définissant la fenêtre de mesure (TM1, TM2) étant réalisés pour déterminer les deux plus grandes valeurs de mesure de demie-onde successives, et
les moyens (35, 37, 39, 41) définissant la fenêtre de mesure (TM1, TM2) étant en outre réalisé pour déterminer à partir des deux plus grandes valeurs de mesure de demie-onde, successives, une durée de période (Δₜₘ) correspondante qui fixe une largueur dans le temps de la fenêtre de mesure (TM1, TM2), et
les moyens (35, 37, 39, 41) définissant la fenêtre de mesure (TM1, TM2) étant en outre réalisés pour fixer le point de départ (TM1) de la fenêtre de mesure sur le passage par zéro de l'amplitude du signal de mesure (UE) de façon que les deux plus grandes valeurs de mesure de demie onde successives se situent dans la fenêtre de mesure (TM1, TM2).

2. Dispositif selon la revendication 1,
**caractérisé en ce que**
les moyens (35, 37, 39, 41) définissant la fenêtre de mesure (TM1, TM2) sont réalisés pour déterminer une fenêtre parasite (TS 1, TS2) ayant la largeur de la fenêtre de mesure (TM1, TM2) et située dans le temps de fonctionnement (TL),
les moyens (35, 37, 39, 41) définissant la fenêtre de mesure (TM 1, TM2) étant réalisés pour fixer une valeur-limite pour la surveillance du signal de mesure (UE) produit dans la fenêtre de perturbations (TS1, TS2),
cette valeur-limite étant fixée à l'aide de la valeur maximale du signal de mesure (UE) situé dans la fenêtre de mesure,
les moyens (35, 37, 39, 41) définissant la fenêtre de mesure (TM1, TM2) étant réalisés pour reconnaître un défaut si le signal de mesure (UE) de la fenêtre parasite (TS1, TS2) dépasse largement leur limite.

3. Dispositif selon l'une des revendications précédentes,
**caractérisé en ce qu'**
il comporte un générateur de déclenchement (33) qui produit l'envoi d'un signal d'émissions (US) donnant le signal de mesure (UE).

4. Dispositif selon l'une des revendications précédentes,
**caractérisé en ce que**
le signal d'ultrasons est formé d'ondes ransversales.

5. Dispositif selon l'une des revendications précédentes,
**caractérisé en ce que**
le signal de sortie du moyen d'exploitation des valeurs de mesures (43) est fourni à une commande (28) pour générer une grandeur caractéristique (1) du procédé de soudage.

6. Dispositif selon la revendication 3,
**caractérisé en ce que**
le générateur de déclenchement (33) produit l'envoi du signal d'émission (US) en fonction de la grandeur caractéristique (1).
